# EUROPÄISCHE PATENTANMELDUNG

(11) **EP 2 191 891 A1**
(43) Veröffentlichungstag der Anmeldung: **02.06.2010**
(21) Anmeldenummer: 08020590.9
(22) Anmeldetag: 27.11.2008
(51) Int. Cl.: B01J 19/00, C08G 65/34, C08G 65/38, C08G 65/40, C08G 65/46, C08J 9/00

(54) **Herstellung von Polymeren mit inhärenter Mikroporosität**

(71) Anmelder: GKSS-Forschungszentrum Geesthacht GmbH, 21502 Geesthacht (DE)
(72) Erfinder: Fritsch, Detlev, Dr., 21465 Reinbek (DE)
(74) Vertreter: Grebner, Christian Georg Rudolf

(57) **Zusammenfassung**

Die Erfindung betrifft ein Verfahren zum Herstellen von Polymeren mit inhärenter Mikroporosität aus einem Ausgangsstoff mittels einer Polykondensation, insbesondere mittels einer Polyethersynthese. Das Verfahren wird dadurch weitergebildet, dass die Polykondensation unter Verwendung einer oder in einer, vorzugsweise kontinuierlich betriebenen, Mikroreaktoreinrichtung (3) ausgeführt wird.

Ferner betrifft die Erfindung eine Verwendung einer Mikroreaktoreinrichtung, insbesondere der Mikroverfahrenstechnik.

## Beschreibung

Die Erfindung betrifft ein Verfahren zur Synthese bzw. zum Herstellen von Polymeren mit inhärenter Mikroporosität aus einem Ausgangsstoff mittels einer Polykondensation, insbesondere mittels einer Polyethersynthese. Ferner betrifft die Erfindung eine Verwendung einer Mikroreaktoreinrichtung, insbesondere der Mikroverfahrenstechnik.

Polymere mit sehr großem freiem Volumen sind nur sehr wenige bekannt. Beispielsweise sind Polyacetylene oder Teflon-Copolymere Polymere mit einem großen freien Volumen.

Die Eigenschaften von einer anderen, neuen Klasse von Polymeren mit großem freiem Volumen, so genannten mikroporösen Polymeren, wurden in mehreren Publikationen beschrieben:
- WO 2005/012397 A3
- Budd, et al. "Polymers of intrinsic microporosity (PIMs): robust, solution-processable, organic nanoporous materials," Chem. Comm. (2004) 230-231
- Budd, et al. "Solution-processed, organophilic membrane derived from a polymer of intrinsic microporosity", Adv. Mat. 16 (2004) 456;
- Kricheldorf, et al. "Cyclic and Telechelic Ladder Polymers Derived from Tetrahydroxytetramethylspirobisindane and 1,4-dicyanotetrafluorobenzene", J. Polym. Sci. Pol. Chem. 44 (2006) 5344-5352.

Diese Polymere werden allgemein als "Polymers of Intrinsic Microporosity (PIM)" d.h. Polymere mit intrinsischer bzw. inhärenter Mikroporosität bezeichnet.

Die oben genannten Dokumente offenbaren Standardsynthesen, bei denen Dimethylformamid (DMF), N-Methyl-pyrrolidon (NMP), Dimethylsulfoxid (DMSO) oder Sulfolan als Lösemittel bei einer Temperatur von 60 bis 70°C über einen Zeitraum der Synthese von 24 bis 72 Stunden eingesetzt wird. Hierbei lässt sich das Reaktionsschema wie folgt darstellen:

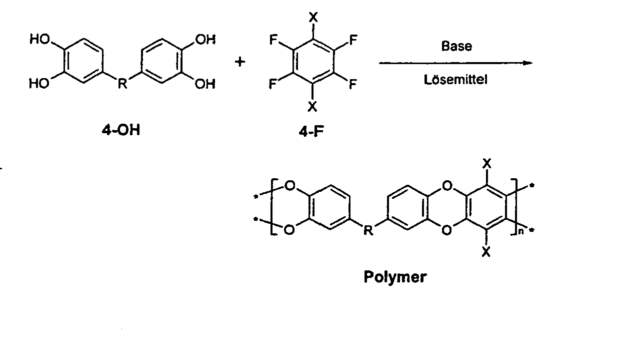

Aus der Tetrahydroxyverbindung (hier Spirobisindan) wird intermediär Kaliumsalz durch die zugegebene feste Base K₂CO₃ gebildet, das mit der Tetrafluorverbindung zum 1,4-Dioxan-Ringschluss führt. Dadurch werden mit fortschreitender Polymerisation steife Leiterpolymere generiert, die durch die Wahl der Tetrahydroxyverbindung lösliche Polymere mit extrem großen freien Volumen ergeben.

Außerdem führt die Verwendung anderer Lösemittel, wie N-Methyl-pyrrolidon (NMP), Dimethylsulfoxid (DMSO) oder Sulfolan, unter Standardbedingungen (Kricheldorf, et al. "Cyclic and Telechelic Ladder Polymers Derived from Tetrahydroxytetramethylspirobisindane and 1,4-dicyanotetrafluorobenzene", J. Polym. Sci. Pol. Chem. 44 (2006) 5344-5352) ebenfalls zu Polymeren, die sich nur wenig in der Zusammensetzung bzw. Struktur unterscheiden.

Da die Polymere während der Synthese aus allen Lösemitteln ausfallen, werden automatisch die Molmassen begrenzt bzw. wird die Polymerisation am ausgefallenen Feststoff weiter, allerdings wesentlich langsamer fortgesetzt.

Höhere Temperaturen bei der Synthese unter Standardbedingungen führen nicht zu höheren Molmassen, wohl aber zu Nebenreaktionen wie Verzweigungen bis hin zur Vernetzung und damit zu keiner Verbesserung. Andere Monomere, die aufgrund sterischer Überlegungen die Kettensteifigkeit noch erhöhen sollten, fallen aus der Polymerisationslösung schon bei zu niedrigen Molmassen aus und führen nicht zu filmbildenen Polymeren, so dass sie deshalb technisch nicht anwendbar sind.

Die Reaktion bei der Standardsynthese insgesamt ist stark exotherm, so dass es empfehlenswert ist, zunächst eine vorbestimmte Zeit bei Raumtemperatur zu rühren, um einen explosionsartigen Verlauf zu verhindern.

Weiterhin weist die Standardsynthese eine sehr lange Reaktionszeit auf und führt zu Polymeren, die für einige Anwendungen kostenaufwändig gereinigt werden müssen. Neben der langen Reaktionszeit von 2 bis 3 Tagen entstehen bei der (Standard-)Synthese ferner zusätzlich niedermolekulare und auch zyklische Anteile, die bei entsprechenden Anwendungen zeit- und kostenaufwändig entfernt werden müssen.

Überdies ist von N. Du, et al,. Macromol. Rapid Commun. 2008, 29, 783-788 ein Verfahren beschrieben, bei dem mit Dimethylacetamid (DMAC) als Lösemittel bei wesentlich höherer Temperatur von 155°C gearbeitet wird. Nach ungefähr zwei Minuten steigt die Viskosität der Lösung sehr stark an und das entstandene Polymer beginnt auszufallen.

Die Ausfällung wird durch die Zugabe von Toluol in zwei Portionen nach zwei Minuten und vier Minuten verhindert und durch die Verdünnung die Viskosität der Reaktionslösung herabgesetzt. Nach insgesamt 8 bis 11 Minuten bei ca. 155°C wird die Reaktion durch Eingießen in Methanol abgebrochen. Es werden dabei sehr hohe Molmassen mit deutlich geringerer Polydispersität erhalten, die vergleichbare mechanische Eigenschaften zur Standardsynthese zeigen.

Die insgesamt erforderliche Reaktionszeit wird bei diesem Verfahren von 2 bis 3 Tagen auf etwa 10 Minuten verkürzt, wobei Polymere ohne niedermolekulare Anteile und mit für eine Filmbildung genügend hohen Molmassen erhalten werden.

Außerdem wird keine Nachreinigung benötigt. Diese Synthese ist mit kleinen Mengen nur im Labor durchführbar und kann nicht auf einen größeren Maßstab übertragen werden, da bei größeren Dimensionen die vorgegebenen Temperaturen in den kurzen Zeiten nicht zu erreichen sind und die Polymerisation bei großen Mengen nicht schlagartig innerhalb einer Minute beendet werden kann.

Somit ist dieses Verfahren von N. Du et al. im Batchansatz im großen Maßstab nicht durchführbar. Überdies besteht die Gefahr, dass die stark exotherme Reaktion nicht kontrolliert werden kann.

Ausgehend von diesem Stand der Technik besteht die Aufgabe der Erfindung darin, Polymere mit intrinsischer Mikroporosität auf einfache Weise, bevorzugterweise kontinuierlich, herzustellen, wobei es möglich sein soll, dass mittels derselben bereitgestellten Anlage bzw. Apparatur sowohl kleinere Mengen an Polymeren mit intrinsischer Mikroporosität, zum Beispiel vom 1 g bis 10 g, als auch größere Mengen von einigen 10 kg/Tag bis einigen 100 kg/Tag herzustellen, wobei die erhaltenen Polymere mit intrinsischer Mikroporosität in einer großen Reinheit erhalten werden sollen.

Gelöst wird diese Aufgabe durch ein Verfahren zum Herstellen von Polymeren mit inhärenter Mikroporosität aus einem Ausgangsstoff mittels einer Polykondensation, insbesondere mittels einer Polyethersynthese, das dadurch weitergebildet wird, dass die Polykondensation, insbesondere die Polyethersynthese, unter Verwendung einer oder in einer, vorzugsweise kontinuierlich betriebenen, Mikroreaktoreinrichtung ausgeführt wird.

Bei der erfindungsgemäßen Synthese der Polymere mit intrinsischer Mikroporosität (PIM) entstehen durch die im Mikroreaktor bzw. in der Mikroreaktoreinrichtung stattfindende Polykondensation, insbesondere Polyethersynthese, aus den Monomeren durch Ringschluss Leiterpolymere mit zyklischen 1,4-Polyethern. Insbesondere werden bzw. sind im Reaktionsprodukt Polymere mit intrinsischer bzw. inhärenter Mikroporosität mit einer geringen Polydispersität ohne zyklische Polymeranteile bzw. Oligomeranteile hergestellt, wobei die erhaltenen Polymere hohe Molmassen aufweisen, so dass die Polymere mit intrinsischer Mikroporosität (PIM) zur Filmbildung durch Entanglement befähigt sind. Durch die Verwendung eines oder mehrerer Mikroreaktoren ist es möglich, Polymere mit intrinsischer Mikroporosität (PIM) in kleinen Mengen von beispielsweise 1 g bis 10 g als auch im großtechnischen Maßstab von einigen 100 kg/Tag herzustellen.

Die Polykondensation bzw. die Polyethersynthese im Mikroreaktor zeichnet sich dadurch aus, dass sie stark exotherm ist und für eine Polykondensation ungewöhnlich schnell in weniger als zehn Minuten, vorzugsweise weniger als 1 oder 2 oder 3oder 4 oder 5 Minuten, zu hochmolekularen Polymeren führt. Ferner ist sie nicht reversibel durch den hohen Energiegewinn des entstehenden Sechsringes.

Zur optimalen Reaktionsführung auf der Grundlage der Mikroverfahrenstechnik werden hierzu die Edukte in gelöster Form vorzugsweise in kurzer Zeit von weniger als 1 Minute, insbesondere von weniger als 30 Sekunden, auf eine vorbestimmte bzw. die erforderliche Reaktionstemperatur gebracht, wobei weiterhin die Edukte in weniger als 1 Minute, vorzugsweise weniger als 30 Sekunden, bei Reaktionstemperatur in einem Mikromischer der Mikroverfahrenstechnik zu einer Reaktionslösung gemischt werden. Typischerweise sind die Mischzeiten in einem Mikromischer sowie die Reaktionszeiten in einem Mikroreaktor mit einer Mischzeit zwischen 0,01 Sekunden und 10 Sekunden , bevorzugt zwischen 0,05 Sekunden und 5 Sekunden, besonders bevorzugt zwischen 0,1 Sekunden und 0,5 Sekunden.

Ein Mikroreaktor im Sinne der vorliegenden Erfindung ist eine mikrosystemtechnische Apparatur mit einem Prozessvolumen bzw. Innenvolumen typischerweise zwischen 0,5 ml und 25 ml (Milliliter), insbesondere zwischen 0,5 und 15 ml (Milliliter). Dabei ist das Prozessvolumen das aktiv temperierte Volumen im Mikroreaktor. Entsprechend der erforderlichen bzw. einer vorbestimmten Reaktionszeit kann der Mikroreaktor variabel aufgebaut sein und ferner auch ein größeres Volumen aufweisen. Darüber hinaus kann ein Mikromischer ein Innenvolumen beispielsweise von typischerweise 0,5 ml aufweisen.

Insbeondere wird die Reaktionslösung im Mikroreaktor während der Reaktion bzw. der Polykondensation, insbesondere der Polyethersynthese, weiterhin durchmischt.

Erfindungsgemäß werden die Mikroreaktoren kontinuierlich betrieben, d.h. dass die Reaktionslösung kontinuierlich durch das Reaktionsvolumen des Mikroreaktors hindurch strömt. Beispielsweise hat ein Kaskadenreaktor der Ehrfeld Mikrotechnik BTS GmbH mit der Artikelnummer 0216 ein Prozessvolumen von 0,06 ml bzw. 0,15 ml. Dieser Kaskadenreaktor wird bevorzugt für Flüssig-Flüssig-Reaktionen sowie Partikelsuspensionen eingesetzt.

Weiterhin wird zur Herstellung der Polymere mit inhärenter Mikroporosität ein bzw. das an einem Ausgang der Mikroreaktoreinrichtung durch die Polykondensation erhaltene Reaktionsprodukt in einem, insbesondere temperierten, Fällmedium ausgefällt. Hierdurch werden nach der Reaktion die Polymere (mit intrinsischer Mikroporosität) aus dem Reaktionsgemisch bzw. dem Reaktionsprodukt aufbereitet und gegebenenfalls isoliert.

Darüber hinaus wird bevorzugterweise in einem oder weiteren Verfahrensschritten das ausgefällte Reaktionsprodukt gefiltert und/oder getrocknet.

Weiterhin zeichnet sich das Verfahren dadurch aus, dass als gelöster bzw. flüssiger Ausgangsstoff eine Mischung aus tetrahydroxyhaltigen Verbindungen bzw. Tetrahydroxyverbindungen (4-OH) und aus tetrafluorhaltigen Verbindungen bzw. Tetrafluorverbindungen (4-F) als Edukte und/oder bei einer vorbestimmten Reaktionstemperatur bereitgestellt wird. Die Bereitstellung der Mischung erfolgt dabei in einem Mikromischer innerhalb von wenigen Millisekunden.

Dazu wird weiter vorgeschlagen, dass die tetrahydroxyhaltigen Verbindungen und die tetrafluorhaltigen Verbindungen als Edukte in einem Mischer, insbesondere in einem Mischer der Mikroverfahrenstechnik, in gelöster Form miteinander zu einem Ausgangsstoff bzw. Ausgangsfluid, der bzw. das dem Mikroreaktor für die Polykondesation zugeführt wird, gemischt werden.

Außerdem wird gemäß einer bevorzugten Ausführungsform vorgeschlagen, dass dem als Fluid vorliegenden Ausgangsstoff, vorzugsweise in einem Mischer der Mikroverfahrenstechnik, eine, vorzugsweise suspendierte, Base zugegeben wird, so dass eine Reaktionslösung erhalten wird. Durch die Zugabe der Base als Suspension wird die Reaktion der Polyethersynthese bzw. der Polykondensation gestartet, wobei nach der Zugabe der suspendierten Base die Reaktionslösung anschließend in den Mikroreaktor eingebracht wird.

Durch Zumischen eines basischen Katalysators zum, vorzugsweise eine Mischung aus Tetrahydroxyverbindungen (4-OH) und Tetrafluorverbindungen (4-F) aufweisenden, Ausgangsfluid bzw. Ausgangsstoff wird die Reaktionslösung für die Polykondensation bzw. Polyethersynthese bereitgestellt, wobei zudem durch die Zugabe der Base die Polykondensation in der Reaktionslösung gestartet wird. Dabei wird bei einer vorbestimmten Reaktionstemperatur im Mikroreaktor vorzugsweise eine Verweilzeit von 3 bis 120 Minuten regelbar eingestellt - je nach Monomeren, Basen und gewünschten Molmassen.

Als Base für die Polyethersynthese wird beispielsweise K₂CO₃ im Überschuss verwendet. Diese Base kann im Mikroreaktor durch spezielle Pumpen in Form einer Suspension zudosiert werden, wobei mit einem Überschuss gearbeitet werden kann. Diese Base kann aber auch durch starke organische Basen, die in den eingesetzten Lösemitteln löslich sind, ersetzt werden. Dadurch lässt sich die Polymerisation besser kontrollieren und die gesamte Polymerisation läuft in homogener Phase ab.

Für die Synthese bzw. die Herstellung der Polymere mit intrinsischer Mikroporosität (PIM) reagiert eine aktivierte Tetrafluorverbindung (4-F) mit einer Tetrahydroxyverbindung (4-OH), um die Tetrahydroxyverbindung (4-OH) in ein reaktiveres Salz überzuführen. Dazu sind als Base die Alkalimetallsalze in Form der Carbonate oder Hydrogencarbonate besonders gut geeignet. Besonders vorteilhaft hat sich neben K₂CO₃ auch Cäsiumcarbonat erwiesen.

Im Laufe der Reaktion reagiert die Base mit den OH-Gruppen des Tetraphenols (4-OH), bildet das entsprechende Salz und reagiert in dieser aktivierten Form sehr schnell unter Bildung des 1,4-Dioxanringes ab. Dadurch werden die Polymere mit intrinsischer Mikroporosität gebildet.

Durch den Einsatz eines Mikroreaktors mit entsprechend großen Bohrungen und einer (Mikro-)Pumpe werden die basischen Suspensionen zuverlässig gepumpt, so dass die suspendierte Base der Ausgangsstoff bzw. dem Ausgangsfluid zugemischt wird. Der basischen Suspension können ferner Cäsiumfluorid (CsF) oder andere Fluoride von Kaliumfluorid (KF) zugesetzt werden, um einen katalytischen Effekt zu erzielen.

Insbesondere werden erfindungsgemäß lösliche Basen in Suspension-Form verwendet und kontinuierlich in den Mikroreaktor eingebracht.

Weiter können Basen, die in Dimethylformamid (DMF), Dimethylacetamid (DMAC), N-Methyl-2-pyrrolidon (NMP), Dimethylsulfoxid (DMSO) oder andere zur Synthese von Polyethern üblicherweise eingesetzte Lösemittel verwendet werden. Dazu sind beispielweise die Salze von Alkoholen, besonders Lithium-, Natrium- und Kaliumsalze wie z.B. Kalium-t-butylat, Natriummethylat etc. geeignet.

Eine weitere Möglichkeit stellt die Verwendung von sehr stark basischen Stickstoffverbindungen dar, die auch geeignet sind, diese Reaktion zu katalysieren. Besonders sollen hierbei 2,2,6,6-Tetramethyl-piperidine, 1,2,2,6,6-Pentamethyl-piperidine, 4-Methoxyl-1,2,2,6,6-pentamethylpiperidine, Diisopropylethylamin, Tris-[2-(2-methoxyethoxy)ethyl]amin (TDA-1) genannt werden. Diese Basen können auch vorteilhaft zusammen mit den anorganischen Basen eingesetzt bzw. verwendet werden.

Erfindungsgemäß werden für die Herstellung von Polymeren mit inhärenter Mikroporosität entsprechende Techniken sowie Vorrichtungen der Mikroreaktionstechnik eingesetzt bzw. verwendet.

Durch die Verwendung von Vorrichtungen der Mikroreaktionstechnik (Mikromischer, Mikroreaktor etc.) wird ein extrem schnelles, effizientes Mischen sowie eine extrem schnelle Temperaturregulierung (sowohl Aufheizen als auch Abkühlen bei stark exothermen Reaktionen) und variabel einstellbare Verweilzeit bei konstanter Temperatur erreicht.

Weiterhin kann durch den modularen Aufbau der Vorrichtungen der Mikroreaktionstechnik auf einer entsprechenden Grundplatte auch die Produktmenge pro Zeit linear gesteigert werden, so dass es mittels derselben Apparatur bzw. desselben Vorrichtungsaufbaus gelingt, einige 100 kg/Tag an Polymeren mit inhärenter Mikroporosität in diesem kontinuierlichen Prozess typischerweise herzustellen.

Durch den Einsatz der Mikroreaktionstechnik können auch im Versuchsstadium kleinere Mengen an neuen Polymeren durch einfache Variation der Monomere hergestellt werden. Außerdem können auch Copolymere entsprechend hergestellt werden.

Überdies wird in einen bevorzugten Verfahrensschritt dem Ausgangsstoff, vorzugsweise in einem Mischer der Mikroverfahrenstechnik, eine gelöste Base zugegeben, so dass eine Reaktionslösung erhalten wird.

Außerdem wird in einem weiteren Verfahrensschritt der Reaktionslösung ein Lösemittel zugegeben. Hierdurch kann die Polyethersynthese in der Reaktionslösung entsprechend gesteuert werden.

Außerdem ist gemäß einer weiteren Ausgestaltung vorgesehen, dass in einem weiteren Verfahrensschritt der Reaktionslösung ein Lösemittel mit einer organischen Base zugegeben wird.

Zweckmäßigerweise wird als Lösemittel ein, insbesondere hochsiedendes, polares aprotisches Lösemittel, insbesondere Dimethylacetamid (DMAC) oder Dimethylformamid (DMF) oder Dimethylsulfoxid (DMSO) oder N,N,N,N - Tetramethylharnstoff oder Sulfolan, verwendet. Alternativ ist es ebenso möglich, aromatische Lösemittel einzusetzen, die bevorzugterweise oberhalb der Reaktionstemperatur sieden.

Überdies ist es bevorzugt, wenn der Fluss der Reaktionslösung in der Mikroreaktoreinrichtung und/oder die Verweildauer der Reaktionslösung in der Mikroreaktoreinrichtung eingestellt und/oder geregelt werden, so dass nach Durchlaufen der Reaktionseinrichtung am Ausgang des Mikroreaktors als Reaktionsprodukt Polymere mit inhärenter Mikroporosität in der Reaktionslösung enthalten sind.

Insgesamt ist die Polymersynthese der Polymere mit intrinsischer Mikroporosität (PIM) kosteneffizient und kann ferner im Maßstab von einigen 100 kg/Tag durchgeführt werden, ohne dass das erhaltene Endprodukt (PIM) mit niedermolekularen Anteilen und makrozyklischen Produkten verunreinigt ist.

Die beschriebene Polykondensation bzw. Polyethersynthese ist aufgrund der schnell ablaufenden, stark exothermen Reaktion besonders gut für eine Synthese im kontinuierlichen Mikroreaktor geeignet.

Typischerweise haben die erfindungsgemäß erhaltenen Polymere mit intrinsischer Mikroporosität eine (BET-)Oberfläche von mindestens 200 m²/g, vorzugsweise mindestens 500 m²/g. Ab einer spezifischen (BET-)Oberfläche von mindestens 700 m²/g werden die Polymere mit intrinsischer Mikroporosität als Polymere mit einem sehr großen freien Volumen bezeichnet. Polymere mit intrinsischer Mikroporosität können gemäß der Erfindung typischerweise eine Oberfläche zwischen 700 m²/g und 1600 m²/g aufweisen.

Eine weitere Eigenschaft der Polymere mit intrinsischer Mikroporosität ist, dass sie einen durchschnittlichen Porendurchmesser von weniger als 100 nm, insbesondere weniger als 20 nm, aufweisen, wodurch die Polymere mikroporös sind. Bevorzugterweise haben die Polymere mit intrinsischer Mikroporosität mittlere Porendurchmesser zwischen 0,2 und 20 nm.

Des Weiteren wird die Aufgabe gelöst durch eine Verwendung einer Mikroreaktoreinrichtung, insbesondere der Mikroverfahrenstechnik, zur Durchführung einer Polykondensation, insbesondere einer Polyethersynthese, wobei die Polykondensation, insbesondere die Polyethersynthese, einer Reaktionslösung in der, vorzugsweise kontinuierlich betriebenen, Mikroreaktoreinrichtung ausgeführt wird oder ist, wobei weiter vorzugsweise zur Synthese bzw. Herstellung von Polymeren mit inhärenter Mikroporosität das oben voranstehend beschriebene Verfahren entsprechend ausgeführt wird.

Zur Vermeidung von Wiederholungen wird auf die voranstehenden Ausführungen zum Verfahren ausdrücklich verwiesen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen. Die Erfindung wird nachstehend ohne Beschränkung des allgemeinen Erfindungsgedankens anhand der beigefügten Zeichnungen exemplarisch näher beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch eine Anordnung zur Synthese von Poly- meren mit inhärenter Mikroporosität gemäß einer ersten Ausführung und
- Fig. 2: schematisch eine Anordnung zur Synthese von Poly- meren mit inhärenter Mikroporosität gemäß einer weiteren Ausführung.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

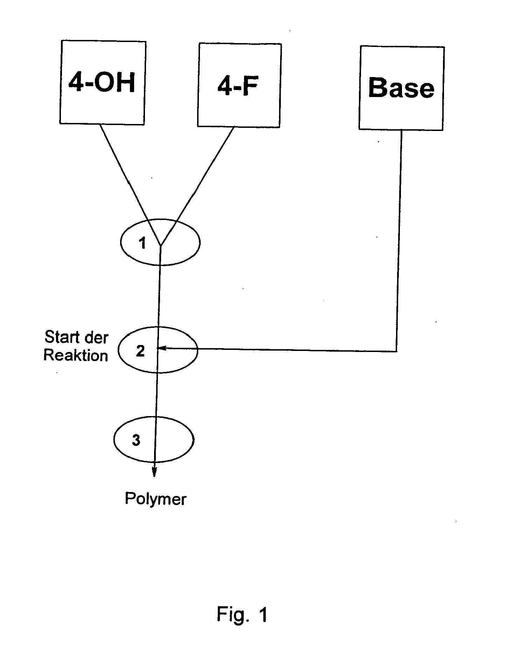

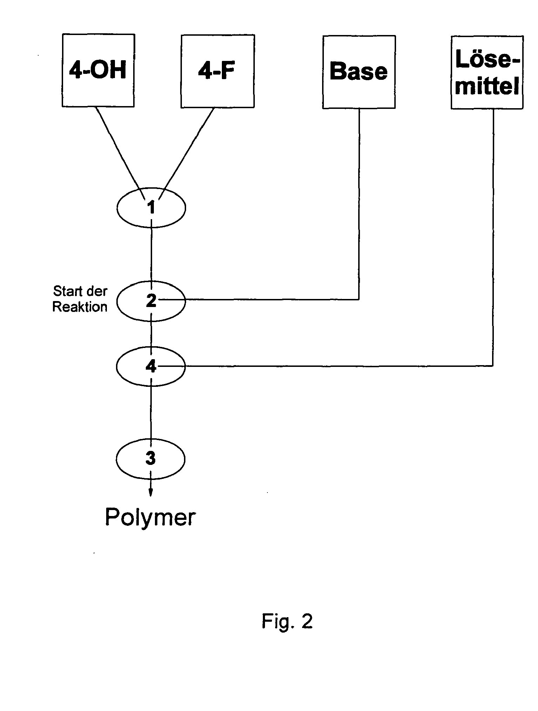

Zwei Ausführungsformen der Synthese von Polymeren mit inhärenter Mikroporosität unter Verwendung eines Mikroreaktors 3 sind in Figuren 1 und 2 schematisch dargestellt.

Gemäß dem in Fig. 1 gezeigten Ausführungsbeispiel werden als Edukte bzw. Komponenten Tetrahydroxyverbindungen (4-OH) und Tetrafluorverbindungen (4-F) aus jeweils einem Vorrat entnommen und in einem Mikromischer 1 zu einem Ausgangsfluid gemischt und gleichzeitig innerhalb von wenigen Sekunden auf die eingestellte Reaktionstemperatur gebracht.

Das Ausgangsfluid im Mikromischer 1 wird nachfolgend in einen zweiten Mikromischer 2 gegeben, dem auch aus einem weiteren Vorrat eine Base zugegeben bzw. zugemischt wird, so dass eine Reaktionslösung entsteht. Der Start der Reaktion in der gebildeten Reaktionslösung erfolgt im Mikromischer 2 durch die Zugabe der Base.

Anschließend wird die Reaktionslösung aus dem Mikromischer 2 in einen Mikroreaktor 3 gefördert bzw. gepumpt. Im Mikroreaktor 3 werden durch den eingestellten Fluss und die Länge des Mikroreaktors 3 die Verweilzeit und damit die Reaktionszeit für die Polymerisation eingestellt.

Am Auslass vom Mikroreaktor 3 wird das durch die im Mikroreaktor 3 stattfindende Polykondensation bzw. Polyethersynthese der Reaktionslösung entstandene Reaktionsprodukt einem gerührten, temperierten Fällmedium zugeführt. Dadurch wird die Polymerisation bzw. Polyethersynthese abgebrochen und das ausgefällte (Zwischen-) Produkt durch Filtration abgetrennt und getrocknet.

Bei dem in Fig. 2 schematisch dargestellten Ausführungsbeispiel wird nach Zugabe der Base und Start der Reaktion im Mikromischer 2 die Reaktionslösung in einen weiteren Mikromischer 4 gegeben, wobei ein, vorzugsweise reines, Lösemittel oder alternativ eine weitere, gelöste Base aus einem separaten Vorrat der Reaktionslösung zugegeben wird, um die Reaktionslösung zu verdünnen und dem Verstopfen des Reaktors 3 durch zu starken Anstieg der Viskosität entgegenzuwirken. Anschließend wird die verdünnte Reaktionslösung in den Mikroreaktor 3 gegeben.

Gemäß dem Ausführungsbeispiel in Fig. 2 wird im im kontinuierlichen Durchfluss betriebenen Mikroreaktor 3 eine definierte Verweilzeit der Reaktionslösung eingestellt, um den erforderlichen Polymerisationsgrad zu erhalten. Das Ende des kontinuierlichen Mikroreaktors 3 kann auch mit einem Druckventil versehen werden, um tiefer siedende Lösemittel wie Toluol oder Xylol in flüssiger Phase zu halten. Alternativ können auch oberhalb der Reaktionstemperatur siedende aromatische Lösemittel, wie Kerosin, Diethylbenzene etc., verwendet werden.

Typische Lösemittel für die Reaktion im Mikroreaktor sind hochsiedende, polare aprotische Lösemittel, wie Dimethylacetamid (DMAC), Dimethylformamid (DMF), Dimethylsulfoxid (DMSO), N,N,N,N - Tetramethylharnstoff, Sulfolan etc..

Der Mikroreaktor 3 kann bis zu Drücken von 20 bar betrieben werden. Es kann auch mit nur einem Mikromischer gearbeitet werden, wenn die Komponenten Tetrahydroxyverbindungen 4-OH und Tetraflourverbindungen 4-F vorher gemischt werden. Da die Reaktion erst bei Zugabe der Base stattfinden kann, ist dies gefahrlos möglich. Dadurch entfällt beispielsweise ein Mikromischer, wodurch sich der Aufbau vereinfacht.

Nachfolgend werden 3 Versuche vorgestellt, bei denen das erfindungsgemäße Verfahren angewendet wurde und die Polykondensation bzw. Polyethersynthese in Mikroreaktoren erfolgte.

### BEISPIEL 1

10,213 g (30 mmol) 5,5',6,6'-Tetrahydroxy-3,3,3',3'-tetramethyl-1,1'-spirobisindane (4-OH) werden mit 5,252 g (26,25 mmol) Tetrafluorterephthalsäuredinitril (4-F) zusammen im Messkolben mit Dimethylacetamid auf 50,0 ml aufgefüllt und gelöst. Diese Lösung (Lösung A) enthält 0,60 mmol/ml an 4-OH Komponenten und 0,525 mol/ml an 4-F Komponenten.

2,2,6,6-Tetramethylpiperidin wird im Messkolben mit trockenem Xylol auf 50,0 ml zur Lösung B einer Konzentration von 1,32 mmol/ml aufgefüllt. Lösung A und Lösung B werden mit Argon entgast, um Oxidationen zu vermeiden.

Mit einer Spritzenpumpe werden beide entgasten Lösungen A und B über eine Strecke mit Drucksensoren gepumpt, um eine mögliche Viskositätszunahme oder eine Verstopfung im Mikroreaktor detektieren zu können. Bis zum Einlass des Mikroreaktors werden Teflonschläuche verwendet.

Es wurde für die Durchführung der Synthese ein Mikroreaktorsystem der Fa. Ehrfeld Mikrotechnik BTS GmbH verwendet. Dies bestand aus einer Grundplatte, Format A5, mit den nötigen Verspannmodulen, Ein-/Auslässen und Dichtscheiben als Zubehörteile.

Die Lösung A wurde einem auf 150°C temperierten Kaskadenreaktor zugeführt. Gleichzeitig wurde über die zweite Öffnung des Reaktors Lösung B zugeführt. Der Auslass war direkt mit einem auf 150°C temperierten Sandwichreaktor verbunden.

Nach einer Verweilzeit von 75 Minuten wurde keine Fällung in Methanol beobachtet. Deshalb wurde der Auslass des Kaskadenreaktors mit einem weiteren Sandwichreaktor verbunden. Nach insgesamt 15 Minuten Verweilzeit in beiden Reaktoren wurde durch Fällen in Methanol ein gelbes, fluoreszierendes Pulver erhalten. Die Molmasse Mw lag nach einer Gel-Permeations-Chromatographie (GPC) bei einem Wert von ca. 4000 g/mol.

Die Pumprate von Lösung A lag bei 0,5 ml/min; Lösung B wurde mit 1,0 ml/min gepumpt, um mindestens stöchiometrische Mengen an Base zur Verfügung zu stellen. Da die zugeführte Menge an 4-OH in leichtem Überschuss zur 4-F Komponente eingesetzt wurde, ergab dieser Ansatz Telechele bzw. telechelische Polymere mit OH-Endgruppen.

### BEISPIEL 2

Beispiel 2 wurde wie Beispiel 1 durchgeführt, wobei als Base Tris-[2-(2-methoxyethoxy)ethyl]amin eingesetzt wurde. Es wurden Telechele bzw. telechelische Polymere mit einer Molmasse Mw von ca. 4000 g/mol erhalten.

### BEISPIEL 3

7,65 g (12,16 mmol) silyliertes 5,5',6,6'-Tetrahydroxy-3,3,3',3'-tetramethyhl-1,1'-spirobisindane (4-OTMS) wurden mit 2,43 g (12,6 mmol) Tetrafluorterephthalsäuredinitril (4-F) in Dimethylacetamid zu einer 0,60 molaren Lösung an 4-OTMS und 4-F gelöst (Lösung C). Die beiden Monomere wurden somit im stöchiometrischen Verhältnis 1 : 1 eingesetzt. Als Base wurde Tris-[2-(2-methoxyethoxy)ethyl]amin (1,32 molar) in einer gesättigten Lösung von Cäsiumfluorid (CsF) in Dimethylacetamid eingesetzt (Lösung D).

Es wurde der Aufbau wie in Beispiel 1 verwendet, wobei sofort beide Reaktoren durchströmt wurden. Um mindestens stöchiometrische Mengen an Base zur Verfügung zu stellen, wurden Pumpraten von 0,5 ml/min für die Lösung C und 1,0 ml/min für die Lösung D eingestellt. Dies entspricht einem Überschuss an Base von 10%.

Eine gasförmige Entwicklung am Reaktorausgang zeigte die Reaktion des 4-OTMS Monomers zu gasförmigem silyliertem Nebenprodukt an. Nach 15 Minuten waren beide Reaktoren von der Reaktionslösung durchströmt und das am Reaktorausgang gefällte Polymer ergab nach einer Gel-Permeations-Chromatographie (GPC) eine Molmasse Mw von ca. 19000 g/mol.

Da am Reaktorausgang im Teflonschlauch eine Ausfällung beobachtet wurde, wurde über einen Mikromischer nach dem Ausgang des ersten Reaktors trockenes Xylol mit einer Pumprate von 0,5 ml/min zudosiert. Dadurch erniedrigte sich die Molmasse Mw auf 11000 g/mol, die Ausfällung wurde jedoch langsam aufgelöst.

### Bezugszeichenliste

- 1: Mikromischer
- 2: Mikromischer
- 3: Mikroreaktor
- 4: Mikromischer

## Patentansprüche

1. Verfahren zum Herstellen von Polymeren mit inhärenter Mikroporosität aus einem Ausgangsstoff mittels einer Polykondensation, insbesondere mittels einer Polyethersynthese, **dadurch gekennzeichnet, dass** die Polykondensation, insbesondere die Polyethersynthese, unter Verwendung einer oder in einer, vorzugsweise kontinuierlich betriebenen, Mikroreaktoreinrichtung (3) ausgeführt wird.

2. Verfahren nach Anspruch 1, **dadurch gekennzeichnet, dass** ein an einem Ausgang der Mikroreaktoreinrichtung (3) durch die Polykondensation erhaltenes Reaktionsprodukt in einem, insbesondere temperierten, Fällmedium ausgefällt wird.

3. Verfahren nach Anspruch 2, **dadurch gekennzeichnet, dass** in einem oder weiteren Verfahrensschritten das ausgefällte Reaktionsprodukt gefiltert und/oder getrocknet wird.

4. Verfahren nach einem der Ansprüche 1 bis 3, **dadurch gekennzeichnet, dass** als Ausgangsstoff eine Mischung aus tetrahydroxyhaltigen Verbindungen und aus tetrafluorhaltigen Verbindungen und/oder bei einer vorbestimmten Reaktionstemperatur bereitgestellt wird.

5. Verfahren nach Anspruch 4, **dadurch gekennzeichnet, dass** die tetrahydroxyhaltigen Verbindungen und die tetrafluorhaltigen Verbindungen als Edukte in einem Mischer, insbesondere in einem Mischer der Mikroverfahrenstechnik, in gelöster Form miteinander gemischt werden.

6. Verfahren nach einem der Ansprüche 1 bis 5, **dadurch gekennzeichnet, dass** dem Ausgangsstoff, vorzugsweise in einem Mischer der Mikroverfahrenstechnik, eine, vorzugsweise suspendierte, Base zugegeben wird, so dass eine Reaktionslösung erhalten wird.

7. Verfahren nach einem der Ansprüche 1 bis 6, **dadurch gekennzeichnet, dass** dem Ausgangsstoff, vorzugsweise in einem Mischer der Mikroverfahrenstechnik, eine gelöste Base zugegeben wird, so dass eine Reaktionslösung erhalten wird.

8. Verfahren nach Anspruch 6 oder 7, **dadurch gekennzeichnet, dass** in einem weiteren Verfahrensschritt der Reaktionslösung ein Lösemittel zugegeben wird.

9. Verfahren nach einem der Ansprüche 6 bis 8, **dadurch gekennzeichnet, dass** in einem weiteren Verfahrensschritt der Reaktionslösung ein Lösemittel mit einer organischen Base zugegeben wird.

10. Verfahren nach Anspruch 8 oder 9, **dadurch gekennzeichnet, dass** als Lösemittel ein, insbesondere hochsiedendes, polares aprotisches Lösemittel, insbesondere Dimethylacetamid (DMAC) oder Dimethylformamid (DMF) oder Dimethylsulfoxid (DMSO) oder N,N,N,N - Tetramethylharnstoff oder Sulfolan, verwendet wird.

11. Verfahren nach einem der Ansprüche 1 bis 10, **dadurch gekennzeichnet, dass** der Fluss der Reaktionslösung in der Mikroreaktoreinrichtung (3) und/oder die Verweildauer der Reaktionslösung in der Mikroreaktoreinrichtung (3) eingestellt und/oder geregelt werden.

12. Verwendung einer Mikroreaktoreinrichtung (3), insbesondere der Mikroverfahrenstechnik, zur Durchführung einer Polykondensation, insbesondere Polyethersynthese, wobei die Polykondensation, insbesondere die Polyethersynthese, einer Reaktionslösung in der, vorzugsweise kontinuierlich betriebenen, Mikroreaktoreinrichtung (3) ausgeführt wird oder ist, wobei weiter vorzugsweise zur Synthese von Polymeren mit inhärenter Mikroporosität ein Verfahren nach einem der Ansprüche 1 bis 11 ausgeführt wird.
